# EUROPÄISCHE PATENTSCHRIFT

(11) **EP 2 400 171 B1**
(45) Veröffentlichungstag und Bekanntmachung des Hinweises auf die Patenterteilung: **22.08.2012**
(21) Anmeldenummer: 10167122.0
(22) Anmeldetag: 24.06.2010
(51) Int. Cl.: F16C 1/12, B60J 5/04, B60J 5/10, E05B 65/12, E05B 65/20

(54) **Betätigungseinrichtung sowie Fahrzeugtür mit einer solchen Betätigungseinrichtung**
Actuation device and vehicle door with such an actuation device
Dispositif d'actionnement et porte de véhicule dotée d'un tel dispositif d'actionnement

(43) Veröffentlichungstag der Anmeldung: 28.12.2011
(73) Patentinhaber: Dura Automotive Systems GmbH, 40549 Düsseldorf (DE)
(72) Erfinder: von Borries, Rainer, 47647 Kerken (DE); Nellen, Peter, 47228 Duisburg (DE)
(74) Vertreter: Paul, Dieter-Alfred

(56) Entgegenhaltungen:
- DE-A1- 10 223 160
- DE-A1-102008 034 770
- DE-U1-202004 019 232
- GB-A- 197 388
- JP-A- 7 269 203

## Beschreibung

Die Erfindung betrifft eine Betätigungseinrichtung zur gleichzeitigen Betätigung von zumindest zwei zu betätigenden Organen mit einem ersten und einem zweiten Betätigungselement zur Betätigung eines ersten zu betätigenden Organs, wobei das erste Betätigungselement einen biegsamen ersten Betätigungsmantel und einen darin verschieblich geführten und biegsamen ersten Kraftübertragungsstrang und das zweite Betätigungselement einen biegsamen zweiten Betätigungsmantel und einen darin verschieblich geführten und biegsamen zweiten Kraftübertragungsstrang aufweisen und wobei die Betätigungseinrichtung ein drittes Betätigungselement mit einem dritten Kraftübertragungsstrang zur Betätigung eines zweiten zu betätigenden Organs aufweist, siehe DE-A-102 23 160. Die Erfindung bezieht sich ferner auf eine mit einer solchen Betätigungseinrichtung ausgestattete Fahrzeugtür.

Insbesondere in Kraftfahrzeugen werden eine Reihe von Betätigungsfunktionen mit Hilfe von Betätigungseinrichtungen, auch Betätigungszüge oder Bowdenzüge genannt, durchgeführt, da sie einfach und robust sind, geringes Gewicht haben und im Regelfall problemlos verlegt werden können. Dabei weist eine solche Betätigungseinrichtung in ihrer Grundform ein Betätigungselement auf, das im Wesentlichen aus zwei Teilen, nämlich einem schlauchförmigen Betätigungsmantel aus biegsamen Material und einem darin verschieblich geführten Kraftübertragungsstrang besteht (vgl. Leiseder, Mechanische Betätigungszüge, Verlag Moderne Industrie, 1994, S. 12 bis 15). Der Kraftübertragungsstrang ist meist als litzenartiger Draht ausgebildet und wird vornehmlich zur Übertragung von Zugkräften eingesetzt. Der Kraftübertragungsstrang sowie der zugehörige Betätigungsmantel können aber auch so ausgebildet sein, dass sie zusätzlich zur Übertragung von Druckkräften geeignet sind.

Um den Kraftübertragungsstrang mit einem Ende an einem Betätigungsorgan und mit dem anderen Ende an einem zu betätigenden Organ anschließen zu können, stehen diese Enden über den Betätigungsmantel vor und haben dort Anschlussstücke. Betätigungsorgane können beispielsweise Gaspedale, Türgriffe, Schalthebel oder dergleichen sein, während die jeweils zugehörigen, zu betätigenden Organe dann ein Vergaser oder eine Einspritzpumpe, ein Schloss bzw. ein Getriebe sind. Betätigungseinrichtungen der vorgenannten Art sind Gegenstand einer Vielzahl auch von Patentliteraturveröffentlichungen, wobei hier lediglich beispielhaft auf DE 90 12 668 U1, DE 20 2004 919 232 U1, DE 10 2008 034 770 A1 und EP 0 763 666 A2 verwiesen wird.

Bei Fahrzeugtüren ist für die Öffnung des Türschlosses in der Regel auf der Innenseite ein Innentürgriff und auf der Außenseite ein Außentürgriff vorgesehen. Beide sind über jeweils ein Betätigungselement der vorgeschriebenen Art mit dem Schloss derart verbunden, dass bei Betätigung beispielsweise des Türinnengriffes keine Beeinflussung des den Türaußengriff mit dem Schloss verbindenden Betätigungselements erfolgt, und umgekehrt. Eine dafür geeignete Betätigungseinrichtung ist in GB 197 388 A zum Zwecke der Steuerung der Drosselklappe eines Vergasers offenbart.

Bei dieser Betätigungseinrichtung kann ein einziges zu betätigendes Organ mit Hilfe von zwei Drahtzügen betätigt werden, die mit jeweils einem Betätigungsorgan versehen sind. Die beiden Drahtzüge enden in einer Kupplungseinrichtung, von der ein dritter Drahtzug zu dem zu betätigenden Organ ausgeht. Über eine Mitnahmeeinrichtung wird der dritte Drahtzug mitgenommen, wenn der erste oder der zweite Drahtzug in Zugrichtung betätigt wird. Dabei wird jeweils der andere, nicht betätigte Drahtzug dieser beiden Drahtzüge nicht mitgenommen. Auf diese Weise kann das zu betätigende Organ von zwei verschiedenen Orten betätigt werden, im Falle des Beispiels der Betätigung einer Drosselklappe zum einen mit dem Gaspedal und zum anderen mit einem Handgashebel.

Insbesondere wenn eine Fahrzeugtür als Schiebetür ausgebildet ist, ist zusätzlich ein Sicherheitsschloss vorgesehen, das einrastet, wenn die Fahrzeugtür in die maximale Offenstellung verschoben ist. Hierdurch soll vermieden werden, dass die Fahrzeugtür sich von selbst wieder in die Schließstellung bewegt, wenn sie von der Bedienungsperson losgelassen wird und das Fahrzeug in Fahrtrichtung abwärts geneigt steht. Hierdurch kann es zu Verletzungen gerade aus-oder einsteigender Personen kommen.

Der Erfindung liegt die Aufgabe zugrunde, eine Betätigungseinrichtung der eingangs genannten Art insbesondere, aber nicht ausschließlich für die Anwendung bei Fahrzeugtüren so zu konzipieren, dass es auf einfache Weise möglich ist, mit der Betätigungseinrichtung auch ein weiteres zu betätigendes Organ, beispielsweise im Falle der Schiebetür ein Sicherheitsschloss, von zumindest zwei Stellen aus zu betätigen.

Diese Aufgabe wird erfindungsgemäß dadurch gelöst, dass eine Kupplungseinrichtung mit einer Mitnahmeeinrichtung vorhanden ist, die derart ausgebildet ist, dass sie bei Betätigung des ersten oder zweiten Kraftübertragungsstrangs in Betätigungsrichtung eine Mitnahme des dritten Kraftübertragungsstrangs in der Betätigungsrichtung ohne Mitnahme des jeweils nicht betätigten ersten oder zweiten Kraftübertragungsstrangs bewirkt, d.h. ohne kraft-oder Bewegungsübertragung auf diesen Kraffübertragangsstrang Grundgedanke der Erfindung ist es, die Betätigungseinrichtung so auszubilden, dass mit Betätigung des ersten oder zweiten Betätigungselementes gleichzeitig der Kraftübertragungsstrang des dritten Betätigungselementes in Betätigungsrichtung mitgenommen wird, ohne dass eine Kraft- oder Bewegungsübertragung auf das jeweils nicht betätigte erste oder zweite Betätigungselement erfolgt. Auf diese Weise werden bei Betätigung eines von zumindest zwei Betätigungsorganen immer zwei zu betätigende Organe ohne Beeinflussung des zu dem anderen Betätigungsorgan gehörenden Betätigungselementes bedient. In dem oben beschriebenen Fall der

Schiebetür ist deshalb das Öffnen des Sicherheitsschlosses durch Betätigung sowohl des Türinnen- als auch des Türaußengriffs möglich. Dies ist für die Bedienung beispielsweise zwecks Entriegelung des Sicherheitsschlosses einfach und bequem.

Die vorliegende Erfindung ist nicht auf das Vorhandensein von nur zwei mit Betätigungsorganen verbindbaren Betätigungselementen beschränkt. Es ist konstruktiv ohne Weiteres möglich, auch ein viertes oder noch mehr Betätigungselemente vorzusehen, die mit jeweils einem Betätigungsorgan verbindbar sind und über die Mitnahmeeinrichtung mit dem dritten, nicht mit einem Betätigungsorgan versehenen Betätigungselement in der vorbeschrieben Weise gekoppelt sind, so dass bei Betätigung eines der dann mehr als zwei Betätigungsorgane immer auch eine Mitnahme des dritten Kraftübertragungsstrangs zwecks Betätigung eines daran angeschlossenen zu betätigenden Organs möglich ist, ohne dass hierdurch die anderen Betätigungselemente und deren Kraftübertragungsstränge beeinflusst werden.

Das dritte Betätigungselement kann im einfachsten Falle lediglich aus dem Kraftübertragungsstrang selbst bestehen, insbesondere wenn der Abstand zu dem damit zu betätigenden Organ gering ist. Dabei kann dieser Betätigungsstrang nicht nur als biegsamer Drahtzug, sondern auch als Kraftübertragungsstange ausgebildet werden, insbesondere dann, wenn eine Druckkraft übertragen werden soll. Sofern der Abstand größer ist, empfiehlt sich, das dritte Betätigungselement analog zu den ersten und zweiten Betätigungselementen auszubilden, indem es einen Betätigungsmantel aufweist, in dem der dann vorzugsweise biegsam ausgebildete dritte Kraftübertragungsstrang verschieblich geführt ist.

Theoretisch besteht die Möglichkeit, dass der dritte Kraftübertragungsstrang zu beiden Seiten aus der Kupplungseinrichtung hinausläuft und seine beiden Enden mit einem oder zwei zu betätigenden Organen verbunden sind, so dass bei Betätigung des ersten oder zweiten Betätigungselementes über den damit mitgenommenen dritten Kraftübertragungsstrang zwei zu betätigende Organe gleichzeitig betätigt werden oder aber das eine zu betätigende Organ mit beiden Enden des dritten Kraftübertragungsstrangs verbunden ist. In den meisten Anwendungsfällen ist es allerdings ausreichend, wenn der dritte Kraftübertragungsstrang in der Kupplungseinrichtung beginnt, also nur an einer Seite aus der Kupplungseinrichtung herausläuft und am freien Ende mit dem zu betätigenden Organ - im Falle der beschriebenen Schiebetür mit dem Sicherheitsschloss - verbunden ist.

Für die Ausbildung der Kupplungseinrichtung ist es zweckmäßig, wenn die Kraftübertragungsstränge im Bereich der Kupplungseinrichtung parallel und vorzugsweise nahe beieinander geführt sind. Hierdurch kann die Mitnahmeeinrichtung kompakt und einfach ausgebildet werden. Sofern nur drei Kraftübertragungsstränge vorhanden sind, bietet es sich als zweckmäßig an, die drei Kraftübertragungsstränge in einer Ebene anzuordnen. Ebenfalls zweckmäßig für die Ausbildung der Kupplungseinrichtung ist es, wenn der dritte Kraftübertragungsstrang zwischen den ersten und zweiten Kraftübertragungssträngen geführt ist, der dritte Kraftübertragungsstrang also von den ersten und zweiten Kraftübertragungssträngen - und eventuellen weiteren Kraftübertragungsstängen - eingerahmt oder sternförmig umgeben wird.

Die Kupplungseinrichtung sollte insbesondere dann, wenn ein gewisser Schutz der Mitnahmeeinrichtung gewünscht ist, ein Kupplungsgehäuse aufweisen, das von den Kraftübertragungssträngen durchsetzt ist. Um eine einfache Montage zu ermöglichen, sollte das Kupplungsgehäuse einen abnehmbaren oder aufklappbaren Gehäusedeckel aufweisen. Sofern die erfindungsgemäße Betätigungseinrichtung aufgrund des vorgesehenen Einsatzzweckes feuchtigkeitsbeaufschlagt ist, sollte das Kupplungsgehäuse feuchtigkeitsdicht ausgebildet sein, d.h. es sollten an den Ein- und Ausgängen für die Kraftübertragungsstränge und gegebenenfalls um den Gehäusedeckel Dichtungsmaßnahmen getroffen sein, beispielsweise in Form von Dichtungsringen, die ein Eindringen von Feuchtigkeit verhindern.

Für die Ausgestaltung der Mitnahmeeinrichtung kommen mehrere Möglichkeiten in Frage. Eine Möglichkeit besteht darin, die Kraftübertragungsstränge mit Mitnahmevorsprüngen zu versehen, und zwar derart, dass die zu den ersten und zweiten Kraftübertragungssträngen gehörenden ersten und zweiten Mitnahmevorsprünge in den Bewegungsbereich des dritten Mitnahmevorsprungs hineinreichen, dabei jedoch nicht mit ihren Bewegungsbereichen überlappen, wobei der dritte Mitnahmevorsprung, in Betätigungsrichtung gesehen, vor den ersten und zweiten Mitnahmevorsprüngen angeordnet ist, so dass er bei Betätigung des ersten oder zweiten Kraftübertragungsstrangs durch Anschlag des jeweils zugehörigen ersten oder zweiten Mitnahmevorsprungs an dem dritten Mitnahmevorsprung mitgenommen wird. Diese Mitnahmeeinrichtung zeichnet sich durch besonders einfache und damit kostengünstige, trotzdem funktionswirksame Gestaltung aus, zumal keine bewegten Teile vorhanden sind.

Bei Betätigung des ersten oder zweiten Kraftübertragungsstrangs wird über den jeweils zugehörigen Mitnahmevorsprung der dritte Mitnahmevorsprung mitgenommen und damit der damit verbundene dritte Kraftübertragungsstrang in Betätigungsrichtung bewegt, d.h. es kommt zu einer Kraftübertragung von dem jeweils betätigten Kraftübertragungsstrang auf den dritten Kraftübertragungsstrang und damit zu einer Bedienung des daran gekoppelten zu betätigenden Organs. Es versteht sich, dass auch weitere Betätigungselemente vorgesehen sein können, sofern deren Kraftübertragungsstränge im Bereich des dritten Mitnahmevorsprungs verlaufen und ebenfalls mit analog zu den ersten und zweiten Kraftübertragungssträngen ausgebildeten und angeordneten Mitnahmevorsprüngen versehen sind, die zwar in den Bewegungsbereich des dritten Mitnahmevorsprungs hineinreichen, nicht jedoch in die der jeweils anderen Mitnahmevorsprünge.

In einfacher Ausführung kann der dritte Mitnahmevorsprung T-förmig mit einem an dem dritten Kraftübertragungsstrang befestigte Fußteil und davon seitlich abstehenden Kopfteilen ausgebildet sein, wobei die Kopfteile den Mitnahmevorsprung bilden. Der dritte Mitnahmevorsprung kann zudem auch so ausgebildet sein, dass er die ersten und zweiten Kraftübertragungsstränge teilweise umgreift und so zusätzliche Anschlagflächen für den dritten Mitnahmevorsprung ausbildet.

Um einwandfreie kinematische Verhältnisse zu erhalten, sollte der dritte Mitnahmevorsprung in der Kupplungseinrichtung verschieblich geführt sein.

In weiterer Ausgestaltung der Erfindung ist vorgesehen, dass zumindest die ersten und die zweiten Kraftübertragungsstränge in der Kupplungseinrichtung jeweils in zwei erste und zwei zweite Teilstränge aufgeteilt sind und jeweils die ersten Teilstränge über ein erstes Kupplungselement und die zweiten Teilstränge über ein zweites Kupplungselement gekuppelt sind. Dies vereinfacht insbesondere die Montage der einzelnen Betätigungselemente und auch die der Mitnahmevorsprünge. Dabei können die Kupplungs-elemente als der erste bzw. zweite Mitnahmevorsprung ausgebildet sein, d.h. die Kupplungselemente haben dann eine Doppelfunktion, da sie nicht nur die zugehörigen Teilstränge verbinden, sondern über ihre räumlich körperlich Ausbildung auch in den Bewegungsbereich des dritten Mitnahmevorsprungs hineinreichen. Es bedarf dann nicht mehr der Anbringung besonderer Mitnahmevorsprünge an den ersten und zweiten Übertragungssträngen. Auch hier gilt selbstverständlich, dass eine analoge Ausbildung möglich ist, wenn weitere Betätigungselemente vorgesehen werden, über die eine Kraftübertragung auf den dritten Kraftübertragungsstrang erfolgen soll.

Die Kupplungselemente können verschiedenartig ausgebildet sein. Bewährt haben sich Kupplungselemente mit in Betätigungsrichtung hintereinander und auf einer Seite offenen Einsatzschächten, in die verdickte Enden der Teilstränge eingesetzt sind (vgl. DE 90 12 668 U1).

Gegenstand der Erfindung ist ferner auch eine Fahrzeugtür, insbesondere ausgebildet als Schiebetür, mit einem Türschloss und mit einer Betätigungseeinrichtung hierfür, wobei das Türschloss über ein erstes Betätigungselement mit einem Türinnengriff und über ein zweites Betätigungselement mit einem Türaußengriff verbunden ist, und wobei ein Sicherheitsschloss vorhanden ist, das mit einem dritten Betätigungselement verbunden ist. Erfindungsgemäß soll die Betätigungseinrichtung nach einem der Ansprüche 1 bis 14 ausgebildet sein, wobei der dritte Kraftübertragungsstrang mit dem Sicherheitsschloss in der Weise verbunden ist, dass das Sicherheitsschloss bei Betätigung des Türinnengriffs oder des Türaußengriffs durch Kraftübertragung von dem jeweils zugehörigen Kraftübertragungsstrang auf den dritten Kraftübertragungsstrang in Offenstellung gebracht wird. Bei einer solchermaßen ausgebildeten Fahrzeugtür kann die Entriegelung des Sicherheitsschlosses durch Betätigung sowohl von innen über den Türinnengriff als auch von außen über den Türaußengriff griffgünstig erfolgen.

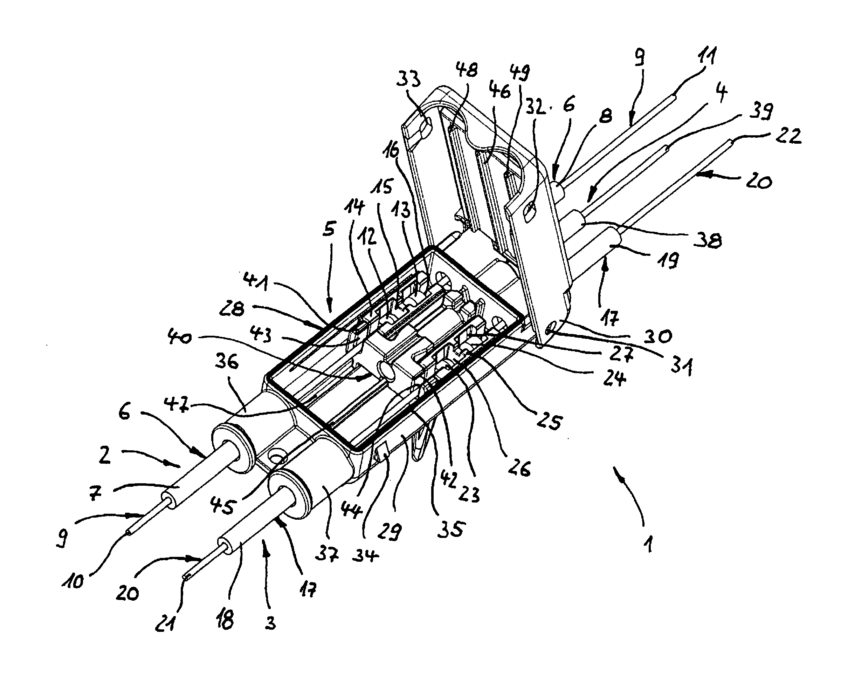

In der Zeichnung ist die Erfindung anhand eines Ausführungsbeispiels näher veranschaulicht. Sie zeigt - teilweise - eine Betätigungseinrichtung 1 mit einem ersten Betätigungselement 2, einem zweiten Betätigungselement 3 und einem dritten Betätigungselement 4 sowie mit einer Kupplungseinrichtung 5 in einer unbetätigten Ausgangsstellung.

Die ersten und zweiten Betätigungselemente 2, 3 sind analog ausgebildet. Das erste Betätigungselement 2 hat einen schlauchförmigen ersten Betätigungsmantel 6, der durch die Kupplungseinrichtung 5 in zwei erste Teilmäntel 7, 8 aufgeteilt ist. Der erste Betätigungsmantel 6 wird von einem ersten Drahtzug 9 durchsetzt, der in der Kupplungseinrichtung 5 in zwei erste Teildrahtzüge 10, 11 aufgeteilt ist. An den einander zugewandten Enden weisen die Teildrahtzüge 10, 11 nippelartige Verdickungen 12, 13 auf, die in einem ersten Kupplungsstück 14 eingesetzt sind. Hierzu weist das erste Kupplungsstück 14 in Richtung des ersten Drahtzuges 9 hintereinander zwei obenseitig offene Kupplungsausnehmungen 15, 16 auf, in die jeweils eine der Verdickungen 12, 13 von oben eingesetzt und dort weitgehend spielfrei gehalten ist. Auf diese Weise sind die beiden ersten Teildrahtzüge 10, 11 zu einem durchgehenden ersten Drahtzug 9 verbunden.

Das zweite Betätigungselement 3 hat ebenfalls einen schlauchförmigen zweiten Betätigungsmantel 17, der durch die Kupplungseinrichtung 5 in zwei zweite Teilmäntel 18, 19 aufgeteilt ist. Der zweite Betätigungsmantel 17 wird von einem zweiten Drahtzug 20 durchsetzt, der in der Kupplungseinrichtung 5 in zwei zweite Teildrahtzüge 21, 22 aufgeteilt ist. An den einander zugewandten Enden weisen die Teildrahtzüge 21, 22 nippelartige Verdickungen 23, 24 auf, die in einem zweiten Kupplungsstück 25 eingesetzt sind. Hierzu weist das zweite Kupplungsstück 25 in Richtung des zweiten Drahtzuges 20 hintereinander zwei obenseitig offene Kupplungsausnehmen 26, 27 auf, in die jeweils eine der Verdickungen 23, 24 von oben eingesetzt und dort weitgehend spielfrei gehalten ist. Auf diese Weise sind die beiden zweiten Teildrahtzüge 21, 22 zu einem durchgehenden zweiten Drahtzug 20 verbunden.

Die Kupplungseinrichtung 5 ist als im Wesentlichen quaderförmiges Kupplungsgehäuse 28 ausgebildet, das aus einem Unterteil 29 und einem Deckel 30 besteht. Der Deckel 30 ist am in dieser Ansicht oberen Teil des Unterteils 29 um eine quer zur Längserstreckung des Kupplungsgehäuses 28 gehende Schwenkachse 31 verschwenkbar und in Offenstellung gezeigt. Er kann über diese Schwenkachse 31 zum Schließen des Kupplungsgehäuses 28 in die Horizontale verschwenkt werden. Dabei rastet er mit Rastöffnungen 32, 33 auf beiden Längsseiten des Deckels 30 in komplementäre Rastvorsprünge 34 auf beiden Längsseiten des Unterteils 29 ein, die dann in die Rastöffnungen 32, 33 einfassen. Aufgrund der keilförmigen Gestalt der Rastvorsprünge 34 ist für das Einrasten nur wenig Kraft erforderlich, während das Öffnen des Kupplungsgehäuses 28 nur unter Aufbiegung der beiden Seitenwandungen des Deckels 30 gelingt.

Auf der Oberkante des Unterteils 29 sitzt ein Dichtungsring 35, der in geschlossenem Zustand des Deckels 30 vollumfänglich an dessen Innenseite anliegt und damit ein Eindringen von Feuchtigkeit verhindert.

Die in dieser Ansicht unteren ersten und zweiten Teilmäntel 7, 18 fassen mit ihren kupplungsseitigen Enden in hülsenförmige Vorsprünge 36, 37 ein und stützen sich dort stirnseitig ab. In den Vorsprüngen 36, 37 sind ebenfalls Dichtringe vorhanden, die ein Eindringen von Feuchtigkeit in den Innenraum des Kupplungsgehäuses 28 vermeiden. Eine entsprechende Anordnung ist auf der anderen Seite des Kupplungsgehäuses 28 vorsehen, jedoch durch den Deckel 30 verdeckt.

Das dritte Betätigungselement 4 beginnt innerhalb der Kupplungseinrichtung 5 und setzt sich dann von der in dieser Ansicht oberen Stirnseite der Kupplungseinrichtung 5 fort. Das dritte Betätigungselement 4 weist einen dritten biegsamen Betätigungsmantel 38 auf, in dem ein dritter Drahtzug 39 axial verschieblich geführt ist. Der dritte Drahtzug 39 ragt in das Innere des Kupplungsgehäuses 28 hinein. An dem dortigen Ende ist ein Mitnahmeelement 40 fixiert, das zu beiden Seiten der ersten und zweiten Teildrahtzüge 10, 21 unter Bildung von Mitnahmevorsprüngen 41, 42 auskragt und diese in U-förmige Nuten 43, 44 beidseitig einfasst. In der gezeigten Darstellung liegen die den ersten und zweiten Kupplungsstücken 14, 25 zugewandten Seiten der Mitnahmevorsprünge 41, 42 an deren Stirnseiten an. Die ersten und zweiten Kupplungsstücke 14, 25 bilden folglich Mitnahmevorsprünge der ersten und zweiten Drahtzüge 9, 20.

Das Mitnahmeelement 40 ist unten- und obenseitig über in Führungsnuten einfassende Führungsschienen 45, 46 in Längsrichtung des Kupplungsgehäuses 28 verschieblich geführt. Zusätzlich sind Nutenführungen 47 im Boden des Unterteils 29 des Kupplungsgehäuses 28 vorgesehen. An der Innenseite des Deckels 30 sind zwei weitere Führungsschienen 48, 49 vorgesehen, die bei geschlossenem Deckel 30 in die Nuten 43, 44 der Mitnahmevorsprünge 41, 42 und auch in entsprechende Ausnehmungen in den ersten und zweiten Kupplungsstücken 14, 25 einfassen. Auf diese Weise sind sowohl diese Kupplungsstücke 14, 25 als auch das Mitnahmeelement 40 weitgehend spielfrei innerhalb des Kupplungsgehäuses 28 verschieblich in Richtung der ersten und zweiten Drahtzüge 9, 20 geführt.

Die Betätigungselemente 2, 3, 4 sind hier nur verkürzt dargestellt. Im eingebauten Zustand, beispielsweise innerhalb einer Fahrzeugtür, ist der erste Teildrahtzug 10 an dem hier nicht dargestellten freien Ende mit einem Türinnengriff und der zweite Teildrahtzug 21 mit seinem hier ebenfalls nicht dargestellten freien Ende mit einem Türaußengriff verbunden. Die beiden zugehörigen Teilmäntel 7 bzw. 18 umhüllen dabei die Teildrahtzüge 10, 21 bis kurz vor deren Enden. Auf der anderen Seite des Kupplungsgehäuses 28 setzen sich die dortigen Teildrahtzüge 11, 22 bis zu einem hier nicht näher dargestellten Türschloss fort, wo sie mit ihren Enden mit der dortigen Türklinke gekoppelt sind. Dabei sind auch diese Teildrahtzüge 11, 22 bis nahezu deren Ende von dem jeweils zugehörigen Teilmantel 8 bis 19 umhüllt. Der dritte Drahtzug 39 des dritten Betätigungselements 4 geht zu einem ebenfalls hier nicht dargestellten Sicherheitsschloss und ist dort mit einen Sicherheitsshaken verbunden. Auch hier setzt sich der dritte Betätigungsmantel 38 bis fast zum Ende des dritten Drahtzuges 39 fort.

Die erfindungsgemäße Betätigungseinrichtung 1 hat folgende Funktionen. Bei Betätigung des Türinnengriffs wird der erste Drahtzug 9, genauer der erste Teildrahtzug 10 aus der gezeigten Ausgangsstellung in Betätigungsrichtung gezogen. Diese Bewegung wird über das erste Kupplungsstück 14 auf den ersten Teildrahtzug 11 übertragen und setzt sich somit bis zu der Schlossklinke des Türschlosses fort und bewirkt dort eine Bewegung der Schlossklinke in Richtung Offenstellung, d.h. das Türschloss wird geöffnet. Die Bewegung des ersten Kupplungsstückes 14 in Betätigungsrichtung hat zur Folge, dass der Mitnahmevorsprung 41 von der gegenüberliegenden Stirnseite des ersten Kupplungsstückes 14 beaufschlagt und in Betätigungsrichtung mitgenommen wird, d.h. die Bewegung des ersten Kupplungsstückes 14 wird auf das Mitnahmeelement 40 übertragen und hat eine entsprechende Bewegung des dritten Drahtzuges 39 in Betätigungsrichtung zur Folge. Dies führt zu einer Bewegung des Sicherheitshakens im Sicherungsschloss in Öffnungsstellung. Bei alledem bleibt die Stellung des zweiten Drahtzuges 20 und des zugehörigen Kupplungsstückes 25 unberührt, d.h. es erfolgt keine Bewegungs- und Kraftübertragung auf diesen Drahtzug 20.

Bei Betätigung des Türaußengriffs ist die Bewegungskinematik umgekehrt. Es wird dann der zweite Drahtzug 20, genauer gesagt zunächst der zweite Teildrahtzug 21 aus der gezeigten Ausgangsstellung in Betätigungsrichtung gezogen. Diese Zugbewegung wird über das zweite Kupplungsstück 25 auf den zweiten Teildrahtzug 22 übertragen, der mit der Schlossklinke des Türschlosses gekoppelt ist, so dass die Schlossklinke in Offenstellung bewegt wird. Durch die Bewegung des zweiten Kupplungsstückes 25 in Betätigungsrichtung wird der dessen Stirnseite gegenüberliegende Mitnahmevorsprung 42 und damit das Mitnahmeelement 40 in Betätigungsrichtung mitgenommen, mit der Folge, dass auch der dritte Drahtzug 39 in Betätigungsrichtung gezogen wird und es damit zu einer Bewegung des damit verbundenen Sicherheitshakens im Sicherungsschloss in die Offenstellung kommt. Dies hat - wie im vorbeschriebenen ersten Fall bei Betätigung des Türinnengriffs - keine Bewegung des ersten Drahtzuges 9 aus der Ausgangsstellung zur Folge.

Die Rückstellung der ersten, zweiten und dritten Drahtzüge 9, 20, 39 in die gezeigten Ausgangsstellungen erfolgt über hier nicht dargestellte Federn an dem Türschloss bzw. dem Sicherheitsschloss. Nach jedem Betätigungsvorgang des Türinnen- oder Türaußengriffs werden also die Kupplungsstücke 14, 25 und das Mitnahmeelement 40 wieder in die gezeigten Ausgangsstellungen zurückbewegt, aus denen heraus dann wieder eine Betätigung erfolgen kann.

## Patentansprüche

1. Betätigungseinrichtung (1) zur gleichzeitigen Betätigung von zumindest zwei zu betätigenden Organen mit einem ersten und einem zweiten Betätigungselement (2, 3) zur Betätigung eines ersten zu betätigenden Organs, wobei das erste Betätigungselement (2) einen biegsamen ersten Betätigungsmantel (6) und einen darin verschieblich geführten und biegsamen ersten Kraftübertragungsstrang (9) und das zweite Betätigungselement (3) einen biegsamen zweiten Betätigungsmantel (17) und einen darin verschieblich geführten und biegsamen zweiten Kraftübertragungsstrang (20) aufweisen, und wobei die Betätigungseinrichtung (1) ein drittes Betätigungselement (4) mit einem dritten Kraftübertragungsstrang (39) zur Betätigung eines zweiten zu betätigenden Organs aufweist, **dadurch gekennzeichnet, dass** eine Kupplungseinrichtung (5) mit einer Mitnahmeeinrichtung vorhanden ist, die derart ausgebildet ist, dass sie bei Betätigung des ersten oder zweiten Kraftübertragungsstrangs (9, 20) in Betätigungsrichtung eine Mitnahme des dritten Kraftübertragungsstrangs (39) in der Betätigungsrichtung ohne Mitnahme des jeweils nicht betätigten ersten oder zweiten Kraftübertragungsstrangs (9, 20) bewirkt, d.h ohne kraft-oder Bewegungübertragung auf diesen Kraflübertragungstrang.

2. Betätigungseinrichtung nach Anspruch 1, **dadurch gekennzeichnet, dass** das dritte Betätigungselement (4) einen biegsamen dritten Betätigungsmantel (38) aufweist, in dem der vorzugsweise biegsam ausgebildete dritte Kraftübertragungsstrang (39) verschieblich geführt ist.

3. Betätigungseinrichtung nach Anspruch 1 oder 2, **dadurch gekennzeichnet, dass** der dritte Kraftübertragungsstrang (39) in der Kupplungseinrichtung (5) beginnt.

4. Betätigungseinrichtung nach einem der Ansprüche 1 bis 3, **dadurch gekennzeichnet, dass** die Kraftübertragungsstränge (9, 20, 39) im Bereich der Kupplungseinrichtung (5) parallel, zweckmäßigerweise in einer Ebene geführt sind.

5. Betätigungseinrichtung nach einem der Ansprüche 1 bis 4, **dadurch gekennzeichnet, dass** der dritte Kraftübertragungsstrang (39) zwischen den ersten und zweiten Kraftübertragungssträngen (9, 20) geführt ist.

6. Betätigungseinrichtung nach einem der Ansprüche 1 bis 5, **dadurch gekennzeichnet, dass** die Kupplungseinrichtung (5) ein Kupplungsgehäuse (28) aufweist, das von den Kraftübertragungssträngen (9, 20, 39) durchsetzt ist und das vorzugsweise einen abnehmbaren oder aufklappbaren Gehäusedeckel (30) aufweist.

7. Betätigungseinrichtung nach Anspruch 6, **dadurch gekennzeichnet, dass** das Kupplungsgehäuse (28) feuchtigkeitsdicht ausgebildet ist.

8. Betätigungseinrichtung nach einem der Ansprüche 1 bis 7, **dadurch gekennzeichnet, dass** die Mitnahmeeinrichtung einen mit dem ersten Kraftübertragungsstrang (9) verbundenen ersten Mitnahmevorsprung (14), einen mit dem zweiten Kraftübertragungsstrang (20) verbundenen zweiten Mitnahmevorsprung (25) und einen mit dem dritten Kraftübertragungsstrang (39) verbundenen dritten Mitnahmevorsprung (40, 41, 42) aufweist und dass die ersten und zweiten Mitnahmevorsprünge (14, 25) in den Bewegungsbereich des dritten Mitnahmevorsprungs (41, 42) hineinreichen, dabei jedoch nicht mit ihren Bewegungsbereichen überlappen, wobei der dritte Mitnahmevorsprung (40, 41, 42) in Betätigungsrichtung gesehen vor den ersten und zweiten Mitnahmevorsprüngen (14, 25) angeordnet ist, so dass der dritte Mitnahmevorsprung (40, 41, 42) bei Betätigung des ersten oder zweiten Kraftübertragungsstrangs (9, 20) durch Anschlag des jeweils zugehörigen Mitnahmevorsprungs (14, 25) an dem dritten Mitnahmevorsprung (40, 41, 42) mitgenommen wird.

9. Betätigungseinrichtung nach Anspruch 8, **dadurch gekennzeichnet, dass** der dritte Mitnahmevorsprung (40) T-förmig mit einem an dem dritten Kraftübertragungsstrang befestigten Fußteil und davon seitlich abstehenden Kopfteilen (41, 42) ausgebildet ist und die Kopfteile (41, 42) den Mitnahmevorsprung bilden.

10. Betätigungseinrichtung nach Anspruch 8 oder 9, **dadurch gekennzeichnet, dass** der dritte Mitnahmevorsprung (40, 41, 42) die ersten und zweiten Kraftübertragungsstränge (9, 20) teilweise umgreift.

11. Betätigungseinrichtung nach einem der Ansprüche 8 bis 10, **dadurch gekennzeichnet, dass** der dritte Mitnahmevorsprung (40, 41, 42) in der Kupplungseinrichtung (5) verschieblich geführt ist.

12. Betätigungseinrichtung nach einem der Ansprüche 1 bis 11, **dadurch gekennzeichnet, dass** zumindest die ersten und zweiten Kraftübertragungsstränge (9, 20) in der Kupplungseinrichtung (5) jeweils in zwei erste und zwei zweite Teilstränge (10, 11, 21, 22) aufgeteilt sind und jeweils die ersten Teilstränge (10, 11) über ein erstes Kupplungselement (14) und die zweiten Teilstränge (21, 22) über ein zweites Kupplungselement (25) gekuppelt sind.

13. Betätigungseinrichtung nach mindestens den Ansprüchen 8 und 11, **dadurch gekennzeichnet, dass** die Kupplungselemente (14, 25) als erste bzw. zweite Mitnahmevorsprünge ausgebildet sind.

14. Betätigungseinrichtung nach Anspruch 12 oder 13, **dadurch gekennzeichnet, dass** die Kupplungselemente (14, 25) in Betätigungsrichtung (Pfeil A) hintereinander und auf einer Seite offene Einsatzschächte (15, 16, 26, 27) aufweisen, in die verdickte Enden (12, 13, 23, 24) der Teilstränge (10, 11, 21, 22) eingesetzt sind.

15. Fahrzeugtür mit einem Türschloss und mit einer Betätigungseinrichtung (1) hierfür, wobei das Türschloss über ein erstes Betätigungselement mit einem Türinnengriff und über ein zweites Betätigungselement (3) mit einem Türaußengriff verbunden ist und wobei ein Sicherheitsschloss vorhanden ist, das mit einem dritten Betätigungselement (4) verbunden ist, **dadurch gekennzeichnet, dass** die Betätigungseinrichtung (1) nach einem der Ansprüche 1 bis 14 ausgebildet ist, wobei der dritte Kraftübertragungsstrang (4) mit dem Sicherheitsschloss in der Weise verbunden ist, dass das Sicherheitsschloss bei Betätigung des Türinnengriffs oder des Türaußengriffs durch Kraftübertragung von dem jeweils zugehörigen Kraftübertragungsstrang (9, 20) auf den dritten Kraftübertragungsstrang (39) in Offenstellung gebracht wird.

## Claims

1. An actuating device (1) for simultaneously actuating at least two components to be actuated comprising a first and a second actuating element (2, 3) for actuating a first component to be actuated, the first actuating element (2) having a flexible first actuating sleeve (6) and a flexible first force transmission strand (9) guided displaceably within the latter, and the second actuating element (3) having a flexible second actuating sleeve (17) and a flexible second force transmission strand (20) guided displaceably within the latter, and the actuating device (1) having a third actuating element (4) with a third force transmission strand (39) for actuating a second component to be actuated, **characterised in that** a coupling device (5) with an entrainment device is provided which is designed such that upon actuating the first or second force transmission strand (9, 20) in the actuating direction it brings about entrainment of the third force transmission strand (39) in the actuating direction without entraining the respectively non-actuated first or second force transmission strand (9, 20), i.e. without force or movement transmission onto this force transmission strand.

2. The actuating device according to Claim 1, **characterised in that** the third actuating element (4) has a flexible third actuating sleeve (38) in which the preferably flexibly designed third force transmission strand (39) is guided displaceably.

3. The actuating device according to Claim 1 or 2, **characterised in that** the third force transmission strand (39) starts in the coupling device (5).

4. The actuating device according to any of Claims 1 to 3, **characterised in that** the force transmission strands (9, 20, 39) in the region of the coupling device (5) are guided in parallel, advantageously in a plane.

5. The actuating device according to any of Claims 1 to 4, **characterised in that** the third force transmission strand (39) is guided between the first and second force transmission strands (9, 20).

6. The actuating device according to any of Claims 1 to 5, **characterised in that** the coupling device (5) has a coupling housing (28) through which the force transmission strands (9, 20, 39) pass and which preferably has a removeable or openable housing cover (30).

7. The actuating device according to Claim 6, **characterised in that** the coupling housing (28) is designed to be moistureproof.

8. The actuating device according to any of Claims 1 to 7, **characterised in that** the entrainment device has a first entrainment projection (14) connected to the first force transmission strand (9), a second entrainment projection (25) connected to the second force transmission strand (20) and a third entrainment projection (40, 41, 42) connected to the third force transmission strand (39), and that the first and second entrainment projections (14, 25) reach into the region of movement of the third entrainment projection (41, 42), but do not overlap with their regions of movement here, the third entrainment projection (40, 41, 42), as seen in the actuating direction, being arranged in front of the first and second entrainment projections (14, 25) so that the third entrainment projection (40, 41, 42) is entrained upon actuating the first or second force transmission strand (9, 20) by the respectively corresponding entrainment projection (14, 25) striking the third entrainment projection (40, 41, 42).

9. The actuating device according to Claim 8, **characterised in that** the third entrainment projection (40) is designed in a T-shape with a foot part fastened to the third force transmission strand and head parts (41, 42) projecting from the latter to the side, and the head parts (41, 42) form the entrainment projection.

10. The actuating device according to Claim 8 or 9, **characterised in that** the third entrainment projection (40, 41, 42) partially encompasses the first and second force transmission strands (9, 20).

11. The actuating device according to any of Claims 8 to 10, **characterised in that** the third entrainment projection (40, 41, 42) is guided displaceably in the coupling device (5).

12. The actuating device according to any of Claims 1 to 11, **characterised in that** at least the first and second force transmission strands (9, 20) in the coupling device (5) are respectively divided into two first and two second partial strands (10, 11, 21, 22) and respectively the first partial strands (10, 11) are coupled by a first coupling element (14) and the second partial strands (21, 22) by a second coupling element (25).

13. The actuating device according to at least Claims 8 and 11, **characterised in that** the coupling elements (14, 15) are in the form of first and second entrainment projections.

14. The actuating device according to Claim 12 or 13, **characterised in that** the coupling elements (14, 25) have insertion slots (15, 16, 26, 27) one behind the other in the actuation direction (arrow A) and open on one side into which thickened ends (12, 13, 23, 24) of the partial strands (10, 11, 21, 22) are inserted.

15. A vehicle door comprising a door lock and an actuating device (10) for the latter, the door lock being connected by a first actuating element to an internal door handle and by a second actuating element (3) to an external door handle, and a safety lock being provided that is connected to a third actuating element, **characterised in that** the actuating device (1) is designed according to any of Claims 1 to 14, the third force transmission strand (4) being connected to the safety lock in such a way that upon actuation of the internal door handle or of the external door handle the safety lock is brought into the open position by the transmission of force from the respectively corresponding force transmission strand (9, 20) to the third force transmission strand (39).

## Revendications

1. Dispositif d'actionnement (1) pour l'actionnement simultané d'au moins deux organes à actionner avec un premier et un deuxième élément d'actionnement (2, 3) pour l'actionnement d'un premier organe à actionner sachant que le premier élément d'actionnement (2) présente une première gaine d'actionnement flexible (6) et une première ligne de transmission de puissance (9) flexible conduite à l'intérieur de manière mobile et le deuxième élément d'actionnement (3) présente une deuxième gaine d'actionnement flexible (17) et une deuxième ligne de transmission de puissance flexible (20) conduite à l'intérieur de manière mobile et sachant que le dispositif d' actionnement (1) présente un troisième élément d'actionnement (4) avec une troisième ligne de transmission de puissance (39) pour l'actionnement d'un deuxième organe à actionner, **caractérisé en ce qu'**un dispositif d'accouplement (5) est disponible avec un dispositif d'accrochage qui se présente de telle manière qu' il provoque lors de l'actionnement de la première ou deuxième ligne de transmission de puissance (9, 20) dans le sens d' actionnement un accrochage de la troisième ligne de transmission de puissance (39) dans le sens d'actionnement sans accrochage de la première ou deuxième ligne de transmission de puissance (9, 20) non actionnée respectivement, à savoir sans transmission de puissance ou de mouvement sur cette ligne de transmission de puissance.

2. Dispositif d'actionnement selon revendication 1, **caractérisé en ce que** le troisième élément d'actionnement (4) présente une troisième gaine d'actionnement (38) flexible dans laquelle la troisième ligne de transmission de puissance (39) de préférence flexible est conduite de manière mobile.

3. Dispositif d'actionnement selon revendication 1 ou 2, **caractérisé en ce que** la troisième ligne de transmission de puissance (39) commence dans le dispositif d'accouplement (5).

4. Dispositif d'actionnement selon l'une des revendications 1 à 3, **caractérisé en ce que** les lignes de transmission de puissance (9, 20, 39) sont conduites parallèlement dans la zone de dispositif d'accouplement (5) de manière appropriée dans un niveau.

5. Dispositif d'actionnement selon l'une des revendications 1 à 4, **caractérisé en ce que** la troisième ligne de transmission de puissance (39) est conduite entre les premières et deuxièmes lignes de transmission de puissance (9, 20).

6. Dispositif d'actionnement selon l'une des revendications 1 à 5, **caractérisé en ce que** le dispositif d'accouplement (5) présente un boîtier d'accouplement (6) qui est traversé par des lignes de transmission de puissance (9, 20, 39) et qui présente de préférence un couvercle de boîtier (30) démontable ou relevable.

7. Dispositif d'actionnement selon revendication 6, **caractérisé en ce que** le boîtier d'accouplement (28) est étanche à l'humidité.

8. Dispositif d'actionnement selon l'une des revendications 1 à 7, **caractérisé en ce que** le dispositif d'accrochage présente une première avancée d'accrochage (14) reliée à la première ligne de transmission de puissance (9), une deuxième avancée d'accrochage (25) reliée à la deuxième ligne de transmission de puissance (20) et une troisième avancée d'accrochage (40, 41, 42) reliée à la troisième ligne de transmission de puissance (39) et que les premières et deuxièmes avancées d'accrochage (14, 25) passent dans la zone de mouvement de la troisième avancée d'accrochage (41, 42), sans pour autant chevaucher avec leurs zones de mouvement, sachant que la troisième avancée d'accrochage (40, 41, 42), vue dans la direction de l'actionnement, est placée avant les premières et deuxièmes avancées d'accrochage (14, 25), de manière à ce que la troisième avancée d'accrochage (40, 41, 42) soit accrochée lors de l' actionnement de la première ou deuxième ligne de transmission de puissance (9, 20) par blocage de l'avancée d'accrochage correspondante (14, 25) sur la troisième avancée d'accrochage (40, 41, 42).

9. Dispositif d'actionnement selon revendication 8, **caractérisé en ce que** la troisième avancée d'accrochage (40) se présente en forme de T avec un élément de pied fixé sur la troisième ligne de transmission de puissance et des éléments de tête (41, 42) se séparant latéralement et les éléments de tête (41, 42) forment l'avancée d'accrochage.

10. Dispositif d'actionnement selon revendication 8 ou 9, **caractérisé en ce que** la troisième avancée d'accrochage (40, 41, 42) enveloppe en partie les premières et deuxièmes lignes de transmission de puissance (9, 20).

11. Dispositif d'actionnement selon revendication 8 ou 9, **caractérisé en ce que** la troisième avancée d'accrochage (40, 41, 42) est conduite de manière mobile dans le dispositif d'accouplement (5).

12. Dispositif d'actionnement selon l'une des revendications 1 à 11, **caractérisé en ce qu'**au moins les premières ou deuxièmes lignes de transmission de puissance (9, 20) sont fragmentées en deux premières et deux deuxièmes lignes partielles (10, 11, 21, 22) et respectivement les premières lignes partielles (10, 11) sont accouplées par un premier élément d'accouplement (14) et les deuxièmes lignes partielles (21, 22) par un deuxième élément d'accouplement (25).

13. Dispositif d'actionnement selon au moins les revendications 8 et 11, **caractérisé en ce que** les éléments d'accouplement (14, 25) sont formés en tant que première ou deuxième avancées d'accrochage.

14. Dispositif d'actionnement selon revendication 12 ou 13, **caractérisé en ce que** les éléments d'accouplement (14, 25) présentent dans le sens d'actionnement (flèche A) des conduits d'insertion ouverts (15, 16, 26, 27) l'un derrière l'autre et sur un côté, dans lesquels des extrémités épaissies (12, 13, 23, 24) des lignes partielles (10, 11, 21, 22) sont insérées.

15. Porte de véhicule avec un verrou de porte et avec un dispositif d'actionnement (1) pour cela, sachant que le verrou de porte est relié par un premier élément d'actionnement avec une poignée de porte intérieure et par un deuxième élément d'actionnement (3) avec une poignée de porte extérieure et sachant qu'un verrou de sécurité est disponible, qui est relié à un troisième élément d'actionnement (4), **caractérisée en ce que** le dispositif d'actionnement (1) se présente selon les revendications 1 à 14, sachant que la troisième ligne de transmission de puissance (4) est reliée avec le verrou de sécurité de manière que le verrou de sécurité est mis en position ouverte en actionnant la poignée de porte intérieure ou la poignée de porte extérieure par transmission de puissance de la ligne de transmission de puissance (9, 20) respectivement correspondante sur la troisième ligne de transmission de puissance (39).
